# EUROPEAN PATENT SPECIFICATION

(11) **EP 0 987 887 B1**
(45) Date of publication and mention of the grant of the patent: **16.09.2009**
(21) Application number: 99117975.5
(22) Date of filing: 16.09.1999
(51) Int. Cl.: H04N 5/44

(54) **Digital tv broadcast receiving apparatus, and transmitting and receiving system**
Digitales Fernsehrundfunkempfangsgerät, und Übertragungs- und Empfangssystem
Appareil de réception de télédiffusion numérique, et système d'émission et de réception

(30) Priority: 17.09.1998 JP 26258098; 18.12.1998 JP 36050398; 11.05.1999 JP 13067899
(43) Date of publication of application: 22.03.2000
(60) Divisional application: 07007773.0
(73) Proprietor: Panasonic Corporation, Kadoma-shi Osaka 571-8501 (JP)
(72) Inventor: Taniguchi, Tomohiko, Moriguchi-shi, Osaka 570-0032 (JP); Nohara, Akira, Nishinomiya-shi, Hyogo 662-0053 (JP)
(74) Representative: Kügele, Bernhard

(56) References cited:
- WO-A-96/00991
- WO-A-96/08088
- DE-A1- 4 321 805
- US-A- 4 742 393
- US-A- 5 553 102
- US-A- 5 659 353

## Description

### BACKGROUND OF THE INVENTION

### 1. FIELD OF THE INVENTION:

The present invention relates to a digital TV broadcast receiving apparatus for receiving digital TV broadcast signals in order to decrease the jamming of the broadcast signals, and a system for transmitting and receiving such digital signals between the transmitting station and such a receiving apparatus.

### 2. DESCRIPTION OF THE RELATED ART:

For analog TV reception, one of the causes of deteriorations of the received signals is multipath interferences caused by reflecting or scattering of the radio waves. A video image suffering from the multipath interferences is distorted or temporarily interrupted. Japanese Laid-Open Publication No. 63-109676, for example, discloses a method for removing ghost from, for example, analog terrestrial TV broadcasting signals for fixed reception, by estimating the propagation characteristics of the radio waves based on reference signals which are inserted into the TV signals and constructing an adaptive equalizing filter for canceling the interfering signals.

However, for the mobile reception device of terrestrial TV signals, it is difficult to estimate the propagation characteristics of the radio waves since the propagation characteristics change drastically as the device moves. In this specification, the terms "mobile" and "moving" are used interchangeably.

Recently, a digital terrestrial TV broadcasting system has been proposed in order to alleviate such problems of the conventional analog terrestrial TV broadcasting system. The digital terrestrial TV broadcasting system is based on the OFDM (orthogonal frequency division multiplexing) technique. OFDM is a multicarrier transmission technique and it is effective against the multipath interferences. For example, in order to prevent the inter-symbol interference caused by reception of the delayed waves, a guard period referred to as a "guard interval" is inserted between the original OFDM symbols.

However, in the mobile environment, the signal quality degrades significantly by frequency selective fading, multipath fading with Doppler shifts and so on. It is because the interferences caused by the reflected signals dissatisfied the orthogonal condition of the OFDM signals. Moreover, for the digital terrestrial TV broadcasting, a SFN (Single Frequency Network) scheme is planned. In the SFN scheme, as the same television program are transmitted from plural transmitting stations by using the identical frequency, it can provide the effective use of the frequency bands. This scheme indispensably causes inter-symbol interference and degradation of frequency characteristics, in the same way as the multipath interferences.

Document WO 96/08088 discloses a digital radio receiver in which received signals are passed through a delay line, and the output signal of the delay line are fed to an adder. The introduced delay may be variable.

Document US 4,742,393 discloses a signal reception system for a television receiver allowing for TV installation in a moving vehicle.

### SUMMARY OF THE INVENTION

The present invention relates to a mobile digital TV broadcast receiving apparatus as defined in the appended claims.

Thus, the invention described herein makes possible the advantage of providing a digital TV broadcast receiving apparatus for alleviating receiving interferences of digital data while receiving the data while moving.

These and other advantages of the present invention will become apparent to those skilled in the art upon reading and understanding the following detailed description with reference to the accompanying figures.

### BRIEF DESCRIPTION OF THE DRAWINGS

Figure 1 is a block diagram showing a structure of a digital TV broadcast receiving apparatus not forming part of the present invention;
Figure 2 is a block diagram showing a structure of another digital TV broadcast receiving apparatus to not forming part of the present invention;
Figure 3 is a block diagram showing a structure of still another digital TV broadcast receiving apparatus not forming part of the present invention;
Figure 4 is a block diagram showing a structure of still another digital TV broadcast receiving apparatus not forming part of the present invention;
Figure 5 is a block diagram showing a structure of a digital TV broadcast receiving apparatus according to the present invention;
Figure 6 is a block diagram showing a structure of another digital TV broadcast receiving apparatus according to the present invention;
Figure 7 is a conceptual view showing results of frequency analysis of a signal which is jammed by a delay wave when received by a signal receiving apparatus;
Figure 8 is a conceptual view of gain control performed by addition means;
Figure 9 is a conceptual view showing the relationship between the error ratio and the delay time period of a delay wave;
Figure 10 is a flowchart illustrating antenna switching;
Figure 11 is a diagram illustrating a method for controlling a delay time period by delay means;

### DESCRIPTION OF THE EMBODIMENTS

Hereinafter, the present invention will be described by way of illustrative examples with reference to the accompanying drawings, the first two examples being provided as background information and the third being in accordance with the present invention.

### (Example 1)

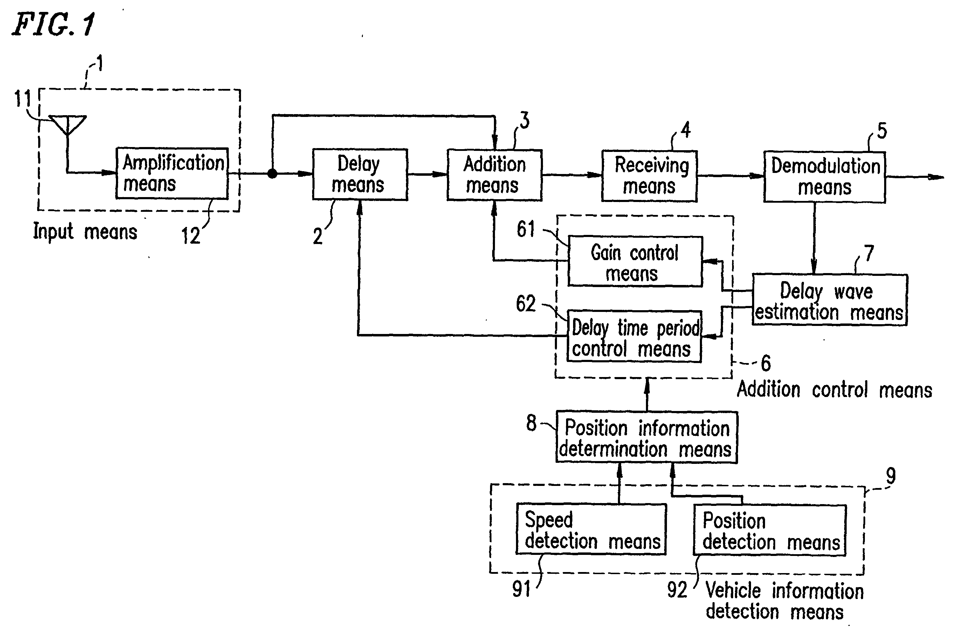

A digital TV broadcast receiving apparatus in a first example will be described with reference to Figure 1. Figure 1 is a block diagram of the digital TV broadcast receiving apparatus in the first example.

As shown in Figure 1, the digital TV broadcast receiving apparatus in the first example includes input means 1, delay means 2, addition means 3, receiving means 4, demodulation means 5, addition control means 6, and delay wave estimation means 7.

The digital TV broadcast receiving apparatus operates, for example, in the following manner.

A radio wave of TV broadcasting is converted into electric signals by, for example, the receiving antenna 11 in the input means 1, and transferred to the delay means 2 and also the addition means 3. In more detail, a TV broadcasting signal which has been converted into the electric signals is delayed by the delay means 2 in accordance with a delay control signal which is sent from the addition control means 6, and then transferred to the addition means 3. The addition means 3 puts a gain to each of the signals sent from the input means 1 and the signal sent from the delay means 2, and then adds the two signals. The added signal is transferred to the receiving means 4. The addition can be performed by a simple operation such as, for example, addition and maximum value selection.

Control of a delay time period performed by the delay means 2 will be described.

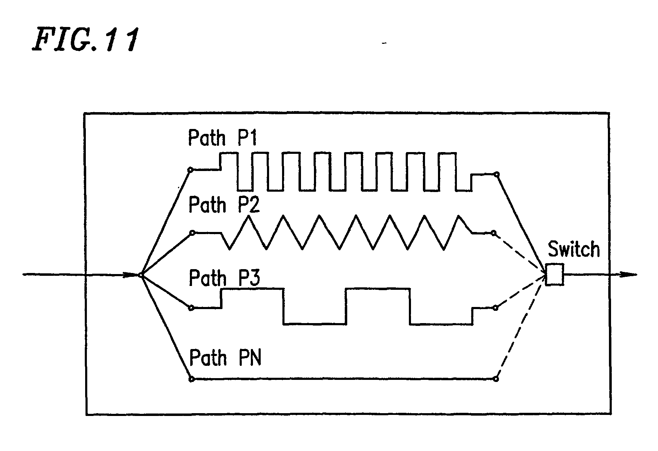

A frequency band of the signals processed by the delay means 2 is a frequency band of TV. Accordingly, the delay means 2 can control the delay time period of the signal by, for example, selecting one of a plurality of paths P1 through PN by a switch. The plurality of paths P1 through PN can be signal lines having different lengths. The switch shown in Figure 11 can select one of the plurality of paths P1 through PN based on a delay control signal obtained by the addition control means 6.

The plurality of paths P1 through PN can be signal lines having different signal propagation characteristics. In this case also, the switch shown in Figure 11 can select one of the plurality of paths P1 through PN based on a delay control signal obtained by the addition control means 6.

The delay means 2 shown in Figure 1 can be structured to shift each of phases by controlling a variable reactance element using a voltage instead of switching the length or signal propagation characteristic of the path using the switch shown in Figure 11.

Returning to Figure 1, the receiving means 4 extracts a signal of a necessary frequency band among the signals obtained by the addition means 3. Then, the receiving means 4 converts the extracted signal into a signal having a frequency which can be processed by the demodulation means 5 and transfers the signal to the demodulation means 5. The demodulation means 5 demodulates a receiving signal and outputs the signal to the delay wave estimation means 7. In other words, the demodulation means 5 provides the delay wave estimation means 7 with demodulation information.

The delay wave estimation means 7 estimates a delay wave included in a receiving wave based on the demodulation information obtained by the demodulation means 5. For example, the delay wave estimation means 7 estimates, based on the information obtained by the demodulation means 5, at least one of a plurality of pieces of delay information, i.e., the strength of the delay wave included in the signal received by the input means 1, the strength of the delay wave, the strength of a direct wave and phase difference between the delay wave and the direct wave, and delay time period of the delay wave with respect to the direct wave.

A method for demodulation and delay wave estimation will be described below.

The digital terrestrial television broadcasting in Japan, for which attempts for standardizing the broadcasting system are being made, uses the OFDM (orthogonal frequency division multiplexing) system as a modulation mode. The demodulation means 5 performs OFDM demodulation to decode a code which is received. The decoding process includes frequency analysis using, for example, FFT (Fast Fourier Transform). When the frequency analysis is performed using FFT, the delay time period can be detected by detecting the positions and number of dips of frequency components of the receiving signal based on the result of the frequency analysis. Alternatively, the demodulation means 5 can demodulate data using various pilot signals included in the signal which has been received. The demodulation means 5 can estimate the transfer characteristic of the signal using the pilot signals.

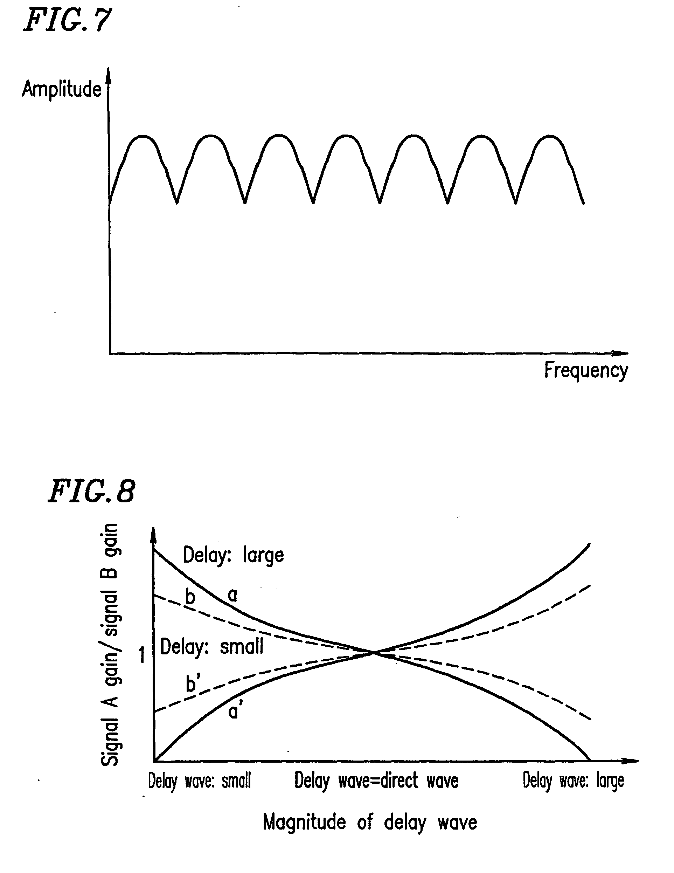

Figure 7 is a graph illustrating the frequency analyzed during the OFDM system when a delay wave exists. As shown in Figure 7, when a delay wave exists, a plurality of frequency components include a dip. When no delay wave exists, the frequency characteristic is flat (not shown).

When a plurality of frequency components include a dip, i.e., when a receiving signal includes a delay wave, the delay wave estimation means 7 can detect the delay wave by observing a change in the pilot signals or deletion of a pilot signal.

When the receiving signal includes a delay wave, the delay wave estimation means 7 can acquire information regarding the position of data including an error by error correction processing which is performed after the FFT, and estimate the delay time period of the interfering wave based on the information.

The above description is made regarding the digital broadcasting system in Japan, but the present invention is applicable to digital broadcasting systems used in different countries. For example, the present invention is applicable to a single carrier transfer system instead of the OFDM system.

Hereinafter, exemplary setting of an addition gain and generation of a delay time period will be described.

The addition control means 6 outputs a signal for controlling the delay means 2 and the addition means 3 based on delay wave information provided by the delay wave estimation means 7. As shown in Figure 1, the addition control means 6 includes gain control means 61 and delay time period control means 62.

The gain control means 61 sets an addition gain at the addition means 3 based on the delay wave information obtained by the delay wave estimation means 7. The addition gain is set as described below with reference to Figure 8. It is assumed that the delay means 2 (Figure 1) includes a first delay section and a second delay section. In Figure 8, the horizontal axis represents the magnitude of the delay wave, and the vertical axis represents the ratio of a signal A gain with respect to a signal B gain (signal A gain/signal B gain). The signal A gain represents a gain of the signal sent from the first delay section to the addition means 3, and the signal B gain represents a gain of the signal sent from the second delay section to the addition means 3.

When the level of the delay wave is higher than a reference level, specifically the level of the delay wave is substantially the same as the level of the direct wave, the gain control means 61 controls the delay wave and the direct wave to be added to have an equal gain.

When the level of the delay wave is lower than the reference level or higher than that of the direct wave, the gain control means 61, for example, controls the addition means 3 to reduce the gain of the signal from the delay means 2 or the gain of the signal from the input means 1 so that the delay wave and the direct wave to be added have different gains.

When the gain control is performed based on the delay time period of the delay wave obtained by the delay wave estimation means 7, the gain control means 61, for example, controls the addition means 3 so that the gain difference between the delay wave and the direct wave is larger when the delay time period is longer (curve **a** in Figure 8) than when the delay time period is shorter (curve **b** in Figure 8).

The delay time period control means 62 (Figure 1) operates as follows. A delay time period, by which the signal needs to be delayed in the delay means 2 under the control of the delay time period control means 62, is set to be substantially the same as the delay time period estimated by the delay wave estimation means 7.

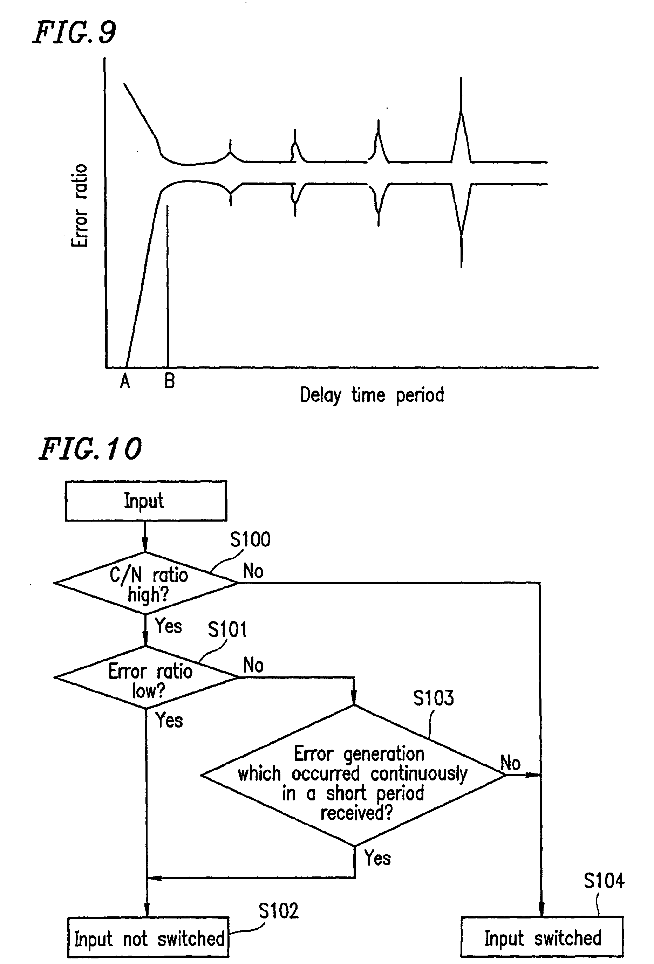

Figure 9 is a graph illustrating an exemplary relationship between the delay wave and an error ratio of the demodulated signal. As shown in Figure 9, when the delay time period is shorter (point B, less than about 2.5 µs), the error ratio tends to drastically increase. The delay time period control means 62 can effectively avoid such an increase in the error ratio by setting the delay time period at a prescribed level (default value) of, for example, about 2.5 µs or more, instead of at the value obtained by the delay wave estimation means 7. The term "error" refers to wrong recognition of a receiving signal. The term "error ratio" indicates, for example, the ratio between the number of correct signals and the number of error signals.

The upper limit of the delay time needs to be less than a guard period added to an OFDM signal. The delay means 2 can always set a prescribed delay time period in order to prevent the error ratio from increasing due to a delay wave having a relatively short delay time period. An influence of a delay wave having a short delay time period can be prevented with certainty by setting the delay time period at twice the value at point B (i.e., about 5 µs).

When a signal is received by an antenna as shown in Figure 1, it is possible that a delay time period shorter than that of a reciprocal of the bandwidth of the receiving signal is given to the signal and the delayed signal is added to the receiving signal, and thus the noise level of the resultant signal is reduced so as to reduce the error ratio. This is possible because the dip positions generated by the signal as a result of the addition are outside the bandwidth of the signal. For example, when the bandwidth of the signal is 500 kHz, the delay time period to add needs to be 2 µs or less. Such a system of adding a signal provided with a short delay time period is effective in improving the receiving level of the frequency of the receiving signals, specifically in narrow bandwidth broadcasting, which is used as service broadcasting for mobile receiving devices.

When the digital TV broadcast receiving apparatus shown in Figure 1 is mounted on a vehicle, the apparatus further includes position information determination means 8 and vehicle information detection means 9. The digital TV broadcast receiving apparatus in the first example can include the position information determination means 8 and the vehicle information detection means 9 even when not mounted on a vehicle.

An exemplary signal receiving operation of the digital TV broadcast receiving apparatus mounted on a vehicle in the first example will be described.

The vehicle information detection means 9, provided for detecting information on a vehicle which is moving, includes speed detection means 91 and position detection means 92.

The speed detection means 91 detects the speed of the vehicle which is receiving signals while moving, and the position detection means 92 detects the position of the vehicle. A navigation device is usable as the vehicle information detection means 9. Usable as the position detection means 92 are, for example, a GPS device, a PHS unit, a cellular phone, and a road monitoring system such as, for example, VICS. The vehicle information detected by the vehicle information detection means 9 is transferred to the position information determination means 8.

The position information determination means 8 acquires information such as topography and finds a digital TV broadcasting station from which the radio wave can be received at the position for receiving the digital TV broadcasting (receiving position). The position information determination means 8 further estimates the delay time period or the strength of the radio wave at the receiving position, in consideration of the distance between the receiving position and the transmitting station or the reflection of the radio wave by mountains or buildings. In order to perform such functions, the position information determination means 8 stores information on the frequency of the signal sent from a transmitting station such as, for example, the broadcasting station or relay station, the location of the transmitting station, signal transmitting output and the like. Such information can be stored by possession or downloading through communication means such as, for example, broadcasting or telephone lines. The position information determination means 8 compares such information with the position information obtained from the vehicle information detection means 9 and finds the delay time period or the strength of the radio wave at the receiving point.

The position information determination means 8 can further show, in a map, information on, for example, the position, size and height of buildings in the vicinity of the receiving point together with the position of the broadcasting station. The delay time period and the strength of the radio wave can be found more accurately by considering the reflection or the like by the buildings. A navigation system, for example, is usable for processing the information on the transmitting station, buildings, mountains and the like.

Since speed detection means 91 provides the speed of the vehicle which is receiving signals while moving, the delay wave which will appear next can be estimated. Accordingly, the delay wave can be followed more quickly than by a system which does not consider the speed of the vehicle.

The addition control means 6 performs addition gain control and the delay time period control, based on the delay wave information obtained by the position information determination means 8. The addition gain control and the delay time period control are performed in the same manner as when the delay wave information obtained by the delay wave estimation means 7 is used.

The information obtained by the delay wave estimation means 7 and the information obtained by the position information determination means 8 can be combined. In this case, only when the contents of the delay wave information obtained by the means 7 and 8 are close to each other, are the gain control and the delay time period control performed. When the contents of the delay wave information obtained by the means 7 and 8 are far from each other, the current state is maintained, or the gain control and the delay time period control are performed based on the information exhibiting a higher delay wave level.

In the above description, the vehicle information detection means 9 includes the speed detection means 91 and the position detection means 92. Alternatively, the vehicle information detection means may include only the position detection means 92. Even with such a structure, signals can be received while the vehicle is moving as well as at a fixed position.

In Figure 1, the input means 1 includes the antenna 11 and amplification means 12. The number of antennas can be two or more. A delay section can be provided in correspondence to each of the plurality of antennas.

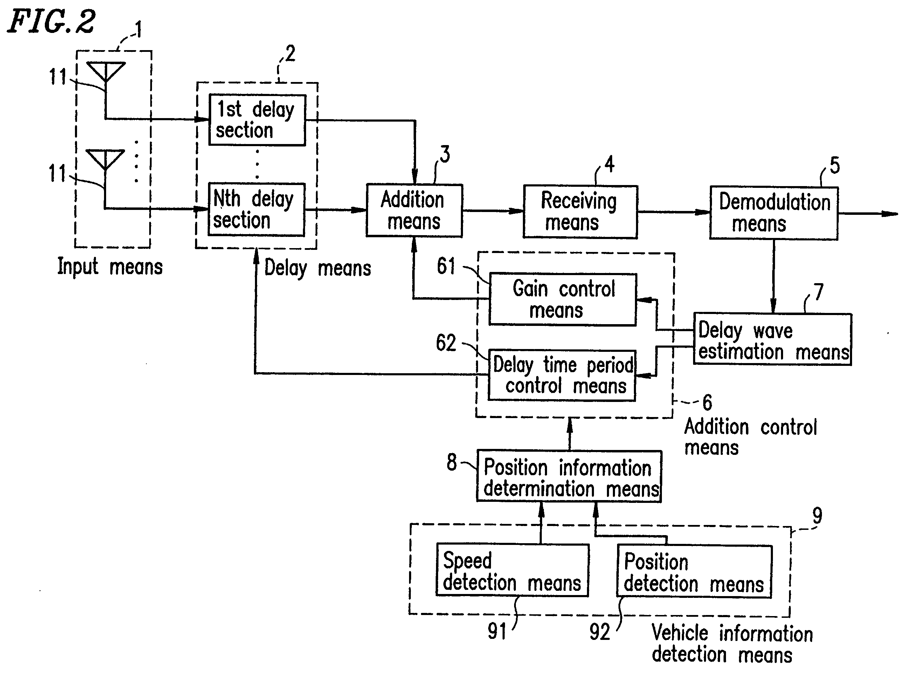

Figure 2 is a block diagram of a digital TV broadcast receiving apparatus, in which the input means 1 includes a plurality of antennas 11 and the delay means 2 includes a plurality of delay sections (e.g., 1st delay section, ...., Nth delay section) respectively in correspondence with the plurality of antennas 11. The digital TV broadcast receiving apparatus operates in the following manner.

When the plurality of antennas 11 receive an identical broadcasting radio wave, the plurality of antennas 11 are interfered by multipath interferences in different manners. Consequently, the plurality of antennas 11 provide different output signals. Such signals have dips shown in Figure 7 at different positions (frequencies) with different depths.

In other words, a signal having dips at different positions or with different depths is obtained by adding a plurality of different receiving signals. As a result, the error ratio (i.e., ratio of wrong recognition of the receiving signals) can be reduced.

In the delay means 2, the delay time period obtained by the addition control means 6 is relatively set in the first through Nth delay sections thereof. The addition means 3 sets the gain obtained by the addition control means 6 in accordance with the delayed signal. Except for the operations of the above-mentioned elements, the digital TV broadcast receiving apparatus shown in Figure 2 operates in substantially the same manner as the digital TV broadcast receiving apparatus shown in Figure 1.

When the plurality of antennas 11 are installed at an interval which is about 1/4 or more of a wavelength of the TV signal, the correlation among the plurality of input signals can be reduced. Thus, by adding together the plurality of input signals from the plurality of antennas 11, the quality of the receiving signal is improved.

When the plurality of antennas 11 are different in directivity or polarization, the correlation among the plurality of input signals can be further reduced. By adding together such a plurality of input signals, the quality of the receiving signal is further improved.

In Figure 2, the plurality of signals output from the delay means 2 are each provided with a gain in accordance with a control signal from the gain control means 61, and the resultant signals are added. Alternatively, as shown in Figure 15, different gains can be given in the first through Nth amplification sections (not shown) in accordance with a control signal from the gain control means 61.

As described above, a digital TV broadcast receiving apparatus in the first example adds signals from the delay means 2 to alleviate the dips in signals, and as a result, reduces the error ratio of the digital data.

An increase in the error ratio is avoided by setting the delay time period so as to avoid an influence of signal having a short delay time period.

An increase in the error ratio is also avoided by further avoiding dips in the signals more accurately. The dips in the signals are alleviated more accurately by obtaining an accurate delay wave by the delay wave estimation means 7, the vehicle information detection means 9 and the position information determination means 8.

Signals from a plurality of antennas can be switched for use in accordance with the error state as will be described with reference to Figure 10.

Figure 10 is a flowchart illustrating an operation of switching antennas.

First, the C/N ratio (carrier/noise ratio) of a signal input to the antenna 11 (Figure 2) and a receiving error generation state during a certain time period in the past (e.g., in one frame period) are obtained. When the C/N ratio is higher than a threshold value ("Yes" in step S100) and the error ratio is lower than the threshold value ("Yes" in step S101), the antenna is not switched (step S102).

Even when the error ratio is not lower than the threshold, if the error generation occurs in a short period of time in a burst manner instead of continuously ("Yes" in step S103), the antenna is not switched (step S102).

When the C/N ratio is not higher than the threshold value ("No" in step S100), or when the error ratio is not lower than the threshold value ("No" in step S101) and the error generation occurs continuously in a short period of time ("No" in step S103), the antenna is switched (step S104).

The timing for switching the antennas can be calculated based on the speed and position of the vehicle.

The antennas can be switched by the unit of a guard interval added to the OFDM signal. In this case, optimum timing for switching the antennas can be obtained with respect to the change in the signal receiving conditions while the vehicle is moving.

### (Example 2)

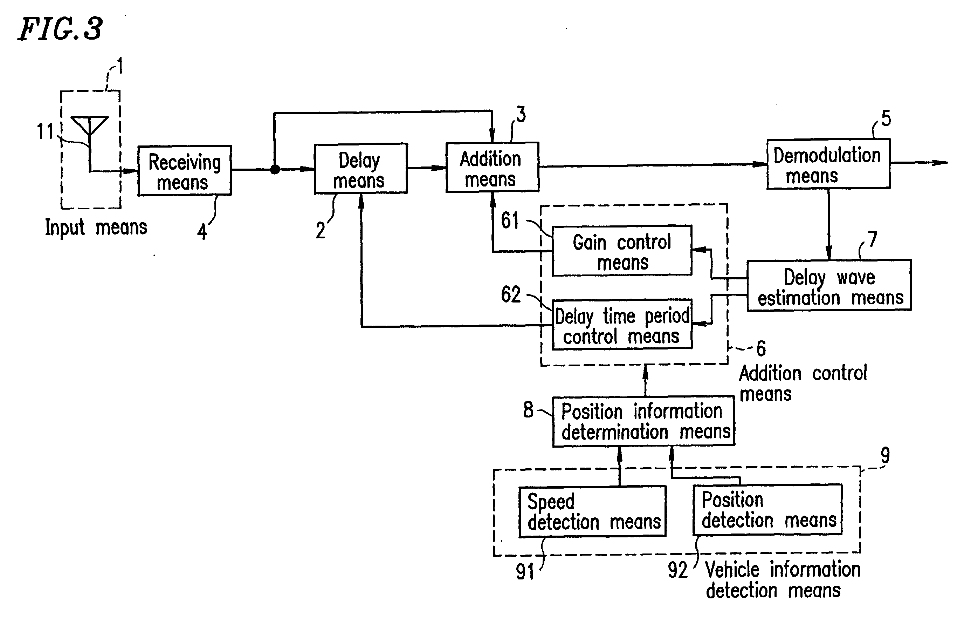

With reference to Figure 3, a digital, TV broadcast receiving apparatus in a second example will be described. Figure 3 is a block diagram of the digital TV broadcast receiving apparatus in the second example.

The digital TV broadcast receiving apparatus in the second example includes input means 1, delay means 2, addition means 3, receiving means 4, demodulation means 5, addition control means 6, and delay wave estimation means 7. The addition control means 6 includes gain control means 61 and delay time period control means 62. When the digital TV broadcast receiving apparatus in the second example is mounted on a mobile such as a vehicle, the apparatus further includes position information determination means 8 and vehicle information detection means 9. The vehicle information detection means 9 includes speed detection means 91 and position detection means 92. The digital TV broadcast receiving apparatus in the second example can include the position information determination means 8 and the vehicle information detection means 9 even when not mounted on a vehicle.

Whereas the apparatus in the first example includes the receiving means 4 connected immediately after the addition means 3, the apparatus in the second example includes the receiving means 4 connected immediately after the input means 1.

An exemplary signal receiving operation of the digital TV broadcast receiving apparatus mounted on a vehicle in the second example will be described.

A radio wave of TV broadcasting is converted into electric signals by, for example, the receiving antenna 11 in the input means 1, and transferred to the receiving means 4. The receiving means 4 extracts only the signal of a necessary frequency band among the signals obtained by the input means 1 and transfers the signal to the delay means 2 and the addition means 3. The signal obtained by the receiving means 4 is delayed by the delay means 2 in accordance with a delay control signal sent from the addition control means 6 and transferred to the addition means 3. The addition means 3 puts a gain to each of the signals sent from the input means 1 and the signal sent from the delay means 2 (weighting) in accordance with an addition control signal sent from the addition control means 6, and then adds the two signals. The added signal is transferred to the demodulation means 5. The addition can be performed by a simple operation such as, for example, addition and maximum value selection as in the first example. The demodulation means 5 demodulates and outputs the signal.

The delay wave estimation means 7 estimates a delay wave based on demodulation information sent from the demodulation means 5 and transfers the delay wave to the addition control means 6 in a manner similar to that described in the first example. The position information determination means 8 estimates a delay wave based on moving receiving information sent from the vehicle information detection means 9 and transfers the delay wave to the addition control means 6 in a manner similar to that described in the first example.

The addition control means 6 obtains control signals for the delay means 2 and the addition means 3 (delay time period and addition ratio) based on signals from the delay wave estimation means 7 and the position information determination means 8.

In signal receiving, the addition control means 6 and the vehicle information detection means 9 operate in a manner similar to that described in the first example. In the apparatus in the second example, the frequency band of the signals processed by the delay means 2 and the addition means 3 is limited by the receiving means 1. Accordingly, the processing performed by the delay means 2 and the addition means 3 is simplified as compared to that in the first example, and still an equivalent effect is obtained.

The frequency band of the signals processed by the delay means 2 is lower than that in the first example. Accordingly, when the delay means 2 delays a signal, the delay time period can be controlled by digital signal processing after the input signal is converted into a digital signal.

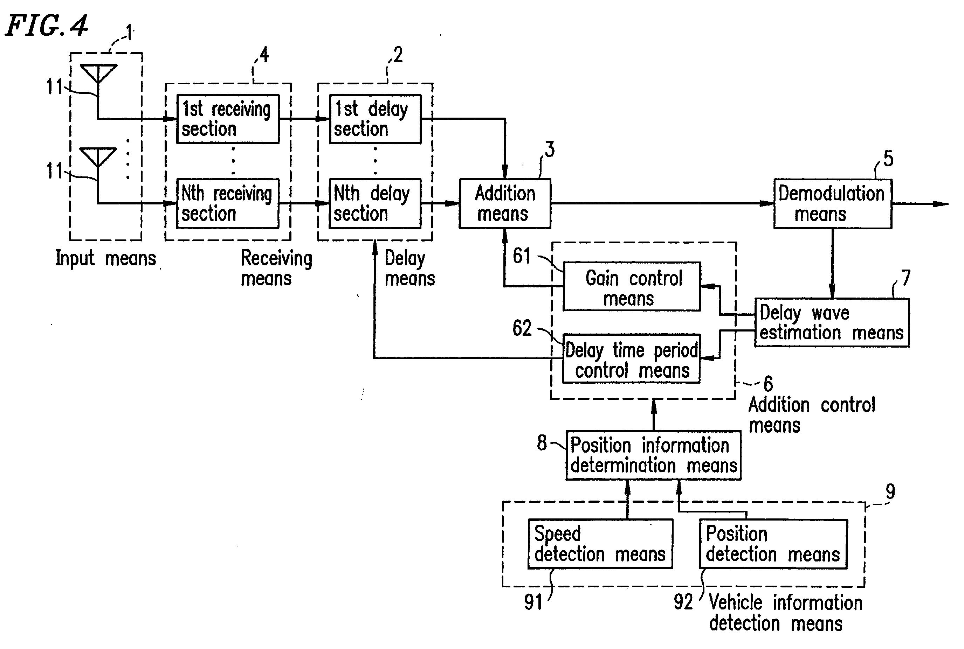

In the digital TV broadcast receiving apparatus in the second example, as shown in Figure 4, the input means 1 can have a plurality of antennas 11 and the receiving means 4 can have first through Nth receiving sections. The delay means 2 can have first through Nth delay sections.

The operation of the digital TV broadcast receiving apparatus shown in Figure 4 is similar to the above-described operation and thus will not be described in detail.

When the plurality of antennas 11 receive an identical broadcasting radio wave in the apparatus shown in Figure 4, the plurality of antennas 11 are interfered by multipath interferences in different manners. Consequently, the plurality of antennas 11 provide different output signals. Such signals have dips shown in Figure 7 at different positions (frequencies) with different depths (not shown). A signal having dips at different positions or with different depths is obtained by adding a plurality of receiving signals. As a result, the error ratio can be reduced.

### (Example 3)

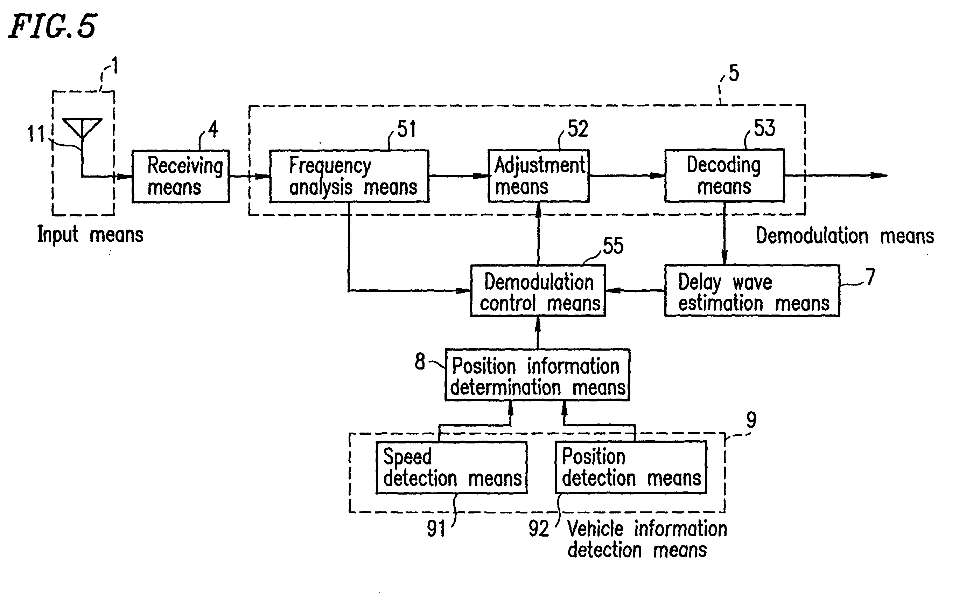

With reference to Figure 5, a digital TV broadcast receiving apparatus in a third example according to the present invention will be described. Figure 5 is a block diagram of the digital TV broadcast receiving apparatus in the third example.

The digital TV broadcast receiving apparatus in the third example includes input means 1, receiving means 4, demodulation means 5, delay wave estimation means 7, and demodulation control means 55. When the digital TV broadcast receiving apparatus in the third example is mounted on a mobile such as a vehicle, the apparatus further includes position information determination means 8 and vehicle information detection means 9. The digital TV broadcast receiving apparatus in the third example can include the position information determination means 8 and the vehicle information detection means 9 even when not mounted on a vehicle.

An exemplary operation of the digital TV broadcast receiving apparatus in the third example at a fixed position and while moving will be described below with reference to Figure 5. The operation of the position information determination means 8 and the vehicle information detection means 9 is the same as in the second example and will not be repeated.

A radio wave of TV broadcasting is converted into electric signals by, for example, the receiving antenna 11 in the input means 1, and transferred to the receiving means 4. The receiving means 4 extracts only the signal of a necessary frequency band among the signals obtained from the input means 1 and transfers the signal to the demodulation means 5. The demodulation means 5 demodulates the signal from the receiving means 4 and outputs the resultant digital signal, and also transfers a demodulation state to the delay wave estimation means 7.

The operation of the demodulation means 5 will be described in detail.

The demodulation means 5 includes frequency analysis means 51, adjustment means 52 and decoding means 53.

The signal obtained by the receiving means 4 is processed by frequency analysis by the frequency analysis means 51 in a frequency analysis method such as, for example, FFT, real FFT, DFT or FHT. The frequency-analyzed signal is transferred to the adjustment means 52. The frequency-analyzed signal can be represented by, for example, the frequency and the magnitude of the signal.

The adjustment means 52 manipulates the signal on a frequency axis obtained by the frequency analysis means 51 based on a control signal from the demodulation control means 55. The manipulation can be performed by, for example, applying the signal obtained from the frequency analysis means 51 to a transfer function, based on the signal from the demodulation control means 55, performing calculation using a filter, or emphasizing a specific frequency component or interpolating a frequency component which is considered to be deleted. The decoding means 53 decodes the signal obtained by the adjustment means 52 into a digital code.

The delay wave estimation means 7 estimates a delay wave information based on the signal obtained from the demodulation means 5. At this point, a frequency spectrum obtained from the frequency analysis means 51 or a pilot signal obtained during decoding performed by the decoding means 53 is referred to.

Figure 7 is a graph showing a frequency spectrum of the receiving signal. In general, in the OFDM modulation mode used in digital TV broadcasting, the frequency spectrum is flat. When a delay wave exists, as shown in Figure 7, dips are generated. Accordingly, the magnitude and delay time period of the delay wave can be estimated.

The magnitude and the delay time period can be estimated from the phase shift or deletion of the pilot signal.

The demodulation control means 55 controls the adjustment means 52 based on delay wave information obtained by the delay wave estimation means 7 or the position information determination means 8. The demodulation control means 55 determines a control parameter(s) corresponding to the adjustment means 52 and transfers the control parameter(s) to the adjustment means 52. For example, when the adjustment means 52 requires a transfer function regarding the delay wave, the demodulation control means 55 finds the transfer function corresponding to the delay wave and transfers the transfer function to the adjustment means 52. When the adjustment means 52 is a filter, the demodulation control means 55 transfers a filter coefficient(s) to the adjustment means 52. When the adjustment means 52 has a structure of interpolating, the demodulation control means 55 transfers an interpolating value to the adjustment means 52. The position information determination means 8 and the vehicle information detection means 9 each have a similar structure to that in the first example.

As described above, in the third example, the adjustment means 52 acts to reduce an influence of the delay wave. Therefore, accurate decoding is realized and the error ratio of the received digital signals is decreased.

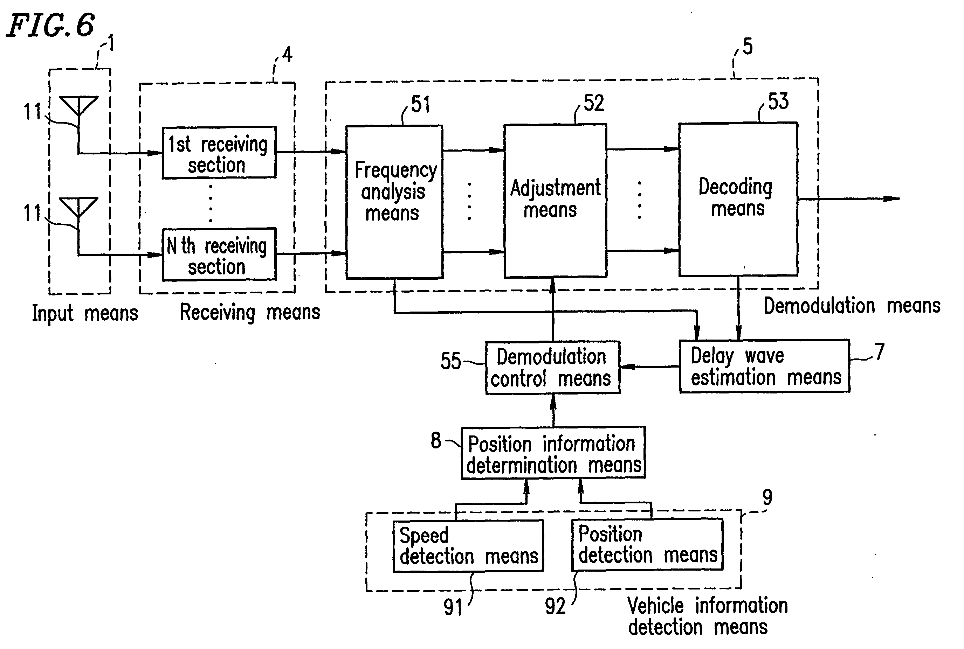

In the digital TV broadcast receiving apparatus in the third example, as shown in Figure 6, the input means 1 can have a plurality of antennas 11 and the receiving means 4 can have first through Nth receiving sections. Although Figure 6 shows one frequency analysis means 51, one adjustment means 52 and one decoding means 53, at least one of the means 51, 52 or 53 can be provided in the number corresponding to the number of the antennas 11. The number of the means depends on the structure thereof. For example, even when the digital TV broadcast receiving apparatus shown in Figure 6 includes one frequency analysis means 51, the digital TV broadcast receiving apparatus normally operates by a selector (not shown) for selecting one signal to be processed by the frequency analysis means 51 among a plurality of signals output from the first through the Nth receiving sections. The same applies to the number of the adjustment means 52 and the decoding means 53.

In the digital TV broadcast receiving apparatus shown in Figure 6, frequency analysis is performed for each signal output from the input means 1. Accordingly, the magnitude and the delay time period of the delay wave corresponding to each signal output from the input means 1 can be estimated. Thus, a signal which is received in a best state can be selected by the adjustment means 52.

The above-described adjustment using the transfer function, filtering or interpolation can be performed on a signal-by-signal basis so that a plurality of signals are decoded by the decoding means 53.

In the decoding means 53 or the adjustment means 52, only a signal having a frequency spectrum received in a good state can be selected and processed based on the frequency analysis results of the signals from each of the antennas 11. In such a case, satisfactory demodulation of a digital code is realized.

As described above, provision of a plurality of antennas 11 in the apparatus shown in Figure 6 reduces the receiving errors.

Various other modifications will be apparent to and can be readily made by those skilled in the art without departing from the scope of this invention, as defined in the appended claims.

## Claims

1. A mobile digital TV broadcast receiving apparatus, comprising:
input means for converting an electromagnetic signal into a plurality of electric signals;
receiving means for performing frequency conversion of the plurality of electric signals output by the input means;
demodulation means for converting the plurality of frequency-converted signals into a baseband signal;
wherein the demodulation means includes:
frequency analysis means for performing frequency analysis of the plurality of electric signals output by the receiving means;
adjustment means for operating on the plurality of signals output by the frequency analysis means and selecting a signal to be processed by a decoding means; and
the decoding means for decoding the selected signal output by the adjustment means,
delay wave estimation means for receiving information on a demodulation state output by the demodulation means and estimating delay wave information included in the electromagnetic wave, and
demodulation control means for modifying a transfer function of said adjustment means based on the delay wave information received from said delay wave estimation means.

2. A mobile digital TV broadcast receiving apparatus according to claim 1, wherein:
the delay wave estimation means estimates the delay wave information including a strength of a delay wave, a phase difference between the delay wave and a direct wave, and a delay time period of the delay wave with respect to the direct wave based on the information on the demodulation state output by the decoding means, and
the demodulation control means generates a control signal based on the delay wave information so as to control the transfer function of the adjustment means and provides the adjustment means with the control signal.

3. A mobile digital TV broadcast receiving apparatus according to claim 1, wherein:
the delay wave estimation means estimates the delay wave information including a strength of a delay wave, a phase difference between the delay wave and a direct wave, and a delay time period of the delay wave with respect to the direct wave based on the information on the demodulation state output by the decoding means and a signal output by the frequency analysis means, and
the demodulation control means generates a control signal based on the delay wave information so as to control the transfer function of the adjustment means and provides the adjustment means with the control signal.

4. A mobile digital TV broadcast receiving apparatus according to claim 1, further comprising:
position detection means for detecting a receiving position of the digital TV broadcast receiving apparatus: and
position information determination means for determining a radio state at the receiving position in accordance with a signal from the position detection means,
wherein the demodulation control means generates a control signal based on the delay wave information output by the delay wave estimation means and the radio state output by the position information determination means, and provides the adjustment means with the control signal.

5. A mobile digital TV broadcast receiving apparatus according to any one of claims 1 through 3, further comprising:
speed detection means for detecting a moving speed of the mobile digital broadcast receiving apparatus;
position detection means for detecting a receiving position of the digital TV broadcast receiving apparatus: and
position information determination means for determining a radio state at the receiving position in accordance with the detected moving speed and the detected receiving position,
wherein the demodulation control means generates a control signal based on the delay wave information output by the delay wave estimation means, the radio state output by the position information determination means and a signal output by the frequency analysis means, and provides the adjustment means with the control signal.

6. A mobile digital TV broadcast receiving apparatus according to claim 5, wherein the speed detection means and the position detection means are a navigation system.

7. A mobile digital TV broadcast receiving apparatus according to any one of claims 1 through 5, wherein the input means includes a plurality of antennas having different receiving characteristics.

## Patentansprüche

1. Mobile digitale Fernseh-Empfangsvorrichtung, die umfasst:
Eingangsmittel, um ein elektromagnetisches Signal in mehrere elektrische Signale umzusetzen;
Empfangsmittel, um eine Frequenzumsetzung der von den Eingangsmitteln ausgegebenen mehreren elektrische Signale auszuführen;
Demodulationsmittel, um die mehreren frequenzumgesetzten Signale in ein Grundbandsignal umzusetzen;
wobei die Demodulationsmittel enthalten:
Frequenzanalysemittel, um eine Frequenzanalyse an den durch die Empfangsmittel ausgegebenen mehreren elektrischen Signalen auszuführen;
Einstellmittel, um die von den Frequenzanalysemitteln ausgegebenen mehreren Signale zu bearbeiten und ein durch ein Decodierungsmittel zu verarbeitendes Signal auszuwählen; und
das Decodierungsmittel, um das von den Einstellmitteln ausgegebene ausgewählte Signal zu decodieren,
Verzögerungswellen-Schätzmittel, um Informationen über einen Demodulationszustand, die von dem Demodulationsmitteln ausgegeben werden, zu empfangen und um Verzögerungswelleninformationen, die in der elektromagnetischen Welle enthalten sind, zu schätzen, und
Demodulationssteuermittel, um eine Übertragungsfunktion der Einstellmittel anhand der Verzögerungswelleninformationen, die von den Verzögerungswellen-Schätzmitteln empfangen werden, zu modifizieren.

2. Mobile digitale Fernseh-Empfangsvorrichtung nach Anspruch 1, wobei:
die Verzögerungswellen-Schätzmittel die Verzögerungswelleninformationen, die eine Stärke einer Verzögerungswelle, eine Phasendifferenz zwischen der Verzögerungswelle und einer direkten Welle und eine Verzögerungszeitdauer der Verzögerungswelle in Bezug auf die direkte Welle enthalten, anhand der Informationen über den durch das Decodierungsmittel ausgegebenen Demodulationszustand schätzen, und
die Demodulationssteuermittel ein Steuersignal anhand der Verzögerungswelleninformationen erzeugen, um die Übertragungsfunktion der Einstellmittel zu steuern, und die Einstellmittel mit dem Steuersignal versorgen.

3. Mobile digitale Fernseh-Empfangsvorrichtung nach Anspruch 1, wobei:
die Verzögerungswellen-Schätzmittel die Verzögerungswelleninformationen, die eine Stärke einer Verzögerungswelle, eine Phasendifferenz zwischen der Verzögerungswelle und einer direkten Welle und eine Verzögerungszeitdauer der Verzögerungswelle in Bezug auf die direkte Welle enthalten, anhand der Informationen über den von dem Decodierungsmittel ausgegebenen Demodulationszustand und eines von den Frequenzanalysemitteln ausgegebenen Signals schätzen, und
die Demodulationssteuermittel ein Steuersignal anhand der Verzögerungswelleninformationen erzeugen, um die Übertragungsfunktion der Einstellmittel zu steuern, und die Einstellmittel mit dem Steuersignal versorgen.

4. Mobile digitale Fernseh-Empfangsvorrichtung nach Anspruch 1, die ferner umfasst:
Positionsdetektionsmittel, um eine Empfangsposition der digitalen Fernseh-Empfangsvorrichtung zu detektieren; und
Positionsinformations-Bestimmungsmittel, um einen Funkzustand an der Empfangsposition in Übereinstimmung mit einem Signal von den Positionsdetektionsmitteln zu bestimmen,
wobei die Demodulationssteuermittel ein Steuersignal anhand von durch die Verzögerungswellen-Schätzmittel ausgegebenen Verzögerungswelleninformationen und des durch die Positionsinformations-Bestimmungsmittel ausgegebenen Funkzustands erzeugen und die Einstellmittel mit dem Steuersignal versorgen.

5. Mobile digitale Fernseh-Emfangsvorrichtung nach einem der Ansprüche 1 bis 3, die ferner umfasst:
Geschwindigkeitsdetektionsmittel, um eine Bewegungsgeschwindigkeit der mobilen digitalen Fernseh-Empfangsvorrichtung zu detektieren;
Positionsdetektionsmittel, um eine Empfangsposition der digitalen Fernseh-Empfangsvorrichtung zu detektieren; und
Positionsinformations-Bestimmungsmittel, um einem Funkzustand an der Empfangsposition in Übereinstimmung mit der detektierten Bewegungsgeschwindigkeit und der detektierten Empfangsposition zu bestimmen,
wobei die Demodulationssteuermittel ein Steuersignal anhand der von den Verzögerungswellen-Schätzmittel ausgegebenen Verzögerungswelleninformationen, des von den Positionsinformations-Bestimmungsmitteln ausgegebenen Funkzustands und eines von den Frequenzanalysemitteln ausgegebenen Signals erzeugen und die Einstellmittel mit dem Steuersignal versorgen.

6. Mobile digitale Fernseh-Empfangsvorrichtung nach Anspruch 5, wobei die Geschwindigkeitsdetektionsmittel und die Positionsdetektionsmittel ein Navigationssystem sind.

7. Mobile digitale Fernseh-Empfangsvorrichtung nach einem der Ansprüche 1 bis 5, wobei die Eingangsmittel mehrere Antennen umfassen, die verschiedene Empfangscharakteristiken besitzen.

## Revendications

1. Appareil de réception de télédiffusion numérique mobile, comprenant :
un moyen d'entrée pour convertir un signal électromagnétique en une pluralité de signaux électriques ;
un moyen de réception pour effectuer une conversion en fréquence de la pluralité de signaux électriques délivrés en sortie par le moyen d'entrée ;
un moyen de démodulation pour convertir la pluralité de signaux convertis en fréquence en un signal de bande de base ;
dans lequel le moyen de démodulation inclut :
un moyen d'analyse de fréquences pour effectuer une analyse de fréquences de la pluralité de signaux électriques délivrés en sortie par le moyen de réception ;
un moyen d'ajustement pour agir sur la pluralité de signaux délivrés en sortie par le moyen d'analyse de fréquences et sélectionner un signal destiné à être traité par un moyen de décodage ; et
le moyen de décodage pour décoder le signal sélectionné délivré en sortie par le moyen d'ajustement,
un moyen d'estimation d'onde de retard pour recevoir des informations sur un état de démodulation délivré en sortie par le moyen de démodulation et estimer des informations d'onde de retard incluses dans l'onde électromagnétique, et
un moyen de commande de démodulation pour modifier une fonction de transfert dudit moyen d'ajustement sur la base des informations d'onde de retard reçues dudit moyen d'estimation d'onde de retard.

2. Appareil de réception de télédiffusion numérique mobile selon la revendication 1, dans lequel :
le moyen d'estimation d'onde de retard estime les informations d'onde de retard incluant une force d'une onde de retard, une différence de phase entre l'onde de retard et une onde directe, et une période de temps de retard de l'onde de retard par rapport à l'onde directe sur la base des informations sur l'état de démodulation délivrées en sortie par le moyen de décodage, et
le moyen de commande de démodulation génère un signal de commande sur la base des informations d'onde de retard de façon à commander la fonction de transfert du moyen d'ajustement et fournit au moyen d'ajustement le signal de commande.

3. Appareil de réception de télédiffusion numérique mobile selon la revendication 1, dans lequel :
le moyen d'estimation d'onde de retard estime les informations d'onde de retard incluant une force d'une onde de retard, une différence de phase entre l'onde de retard et une onde directe, et une période de temps de retard de l'onde de retard par rapport à l'onde directe sur la base des informations sur l'état de démodulation délivrées en sortie par le moyen de décodage et d'un signal délivré en sortie par le moyen d'analyse de fréquences, et
le moyen de commande de démodulation génère un signal de commande sur la base des informations d'onde de retard de façon à commander la fonction de transfert du moyen d'ajustement et fournit au moyen d'ajustement le signal de commande.

4. Appareil de réception de télédiffusion numérique mobile selon la revendication 1, comprenant en outre :
un moyen de détection de position pour détecter une position de réception de l'appareil de réception de télédiffusion numérique ; et
un moyen de détermination d'informations de position pour déterminer un état radio au niveau de la position de réception en fonction d'un signal provenant du moyen de détection de position,
dans lequel le moyen de commande de démodulation génère un signal de commande sur la base des informations d'onde de retard délivrées en sortie par le moyen d'estimation d'onde de retard et de l'état radio délivré en sortie par le moyen de détermination d'informations de position, et fournit au moyen d'ajustement le signal de commande.

5. Appareil de réception de télédiffusion numérique mobile selon l'une quelconque des revendications 1 à 3, comprenant en outre :
un moyen de détection de vitesse pour détecter une vitesse de déplacement de l'appareil de réception de diffusion numérique mobile ;
un moyen de détection de position pour détecter une position de réception de l'appareil de réception de télédiffusion numérique mobile ; et
un moyen de détermination d'informations de position pour déterminer un état radio au niveau de la position de réception en fonction de la vitesse de déplacement détectée et de la position de réception détectée,
dans lequel le moyen de commande de démodulation génère un signal de commande sur la base des informations d'onde de retard délivrées en sortie par le moyen d'estimation d'onde de retard, de l'état radio délivré en sortie par le moyen de détermination d'informations de position et d'un signal délivré en sortie par le moyen d'analyse de fréquences, et fournit au moyen d'ajustement le signal de commande.

6. Appareil de réception de télédiffusion numérique mobile selon la revendication 5, dans lequel le moyen de détection de vitesse et le moyen de détection de position sont un système de navigation.

7. Appareil de réception de télédiffusion numérique mobile selon l'une quelconque des revendications 1 à 5,
dans lequel le moyen d'entrée inclut une pluralité d'antennes ayant différentes caractéristiques de réception.
